# EUROPÄISCHE PATENTSCHRIFT

(11) **EP 1 859 989 B1**
(45) Veröffentlichungstag und Bekanntmachung des Hinweises auf die Patenterteilung: **09.03.2016**
(21) Anmeldenummer: 06010173.0
(22) Anmeldetag: 17.05.2006
(51) Int. Cl.: B60P 3/36, B60R 16/03

(54) **Elektrische Anlage für Wohnaufbau**
Electrical installation for a camper
Installation électrique pour camping-car

(43) Veröffentlichungstag der Anmeldung: 28.11.2007
(73) Patentinhaber: Hobby-Wohnwagenwerk Ing. Harald Striewski GmbH, 24787 Fockbek (DE)
(72) Erfinder: Striewski, Harald, 24787 Fockbek (DE)
(74) Vertreter: Stenger Watzke Ring

(56) Entgegenhaltungen:
- EP-A- 0 471 630
- EP-A- 0 731 001
- EP-A- 1 466 781
- EP-A1- 0 307 344
- WO-A-91/06447
- WO-A1-02/087053
- DE-A1- 3 405 466
- DE-A1- 10 211 970
- DE-A1- 19 857 916
- DE-U1- 9 211 617
- DE-U1- 20 211 318
- GB-A- 1 054 512
- US-A- 3 717 805

## Beschreibung

Die vorliegende Erfindung betrifft ein Verfahren zum Betrieb einer elektrischen Anlage eines Fahrzeugs. Ein gattungsgemäßes Verfahren ist in DE 20211318 U offenbart.

Fahrzeuge wie Wohnwagen, Wohnmobile, aber auch Schiffe und dergleichen können mit einem Wohnaufbau versehen sein, der es ermöglicht, eine wohnungsähnliche Unterkunft bereitzustellen. Moderne Fahrzeuge lassen kaum noch Komfort-Wünsche offen, obwohl aufgrund ihrer Mobilität besondere Anforderungen und Bedingungen zu berücksichtigen sind, die eine Übertragung von Installationen von stationären Wohneinrichtungen verhindern. Trotzdem weisen sie Installationen für Wasser, Gas, elektrischen Strom, Abwasser und dergleichen auf, wie sie aus stationären Wohneinrichtungen bekannt und gebräuchlich sind.

Bei den im vorliegenden Fall mobilen Wohneinrichtungen sind elektrische Anlagen zum Zwecke der Beleuchtung, der Energieversorgung elektrischer Verbraucher in Form von Konsumgeräten und dergleichen vorgesehen. Oftmals wird die elektrische Anlage aus einem Akkumulator mit elektrischer Energie versorgt, der während der Fahrt des Fahrzeugs aufgeladen werden kann. Daneben oder zusätzlich kann eine Versorgung der elektrischen Anlage aus einer öffentlichen Energieversorgung, insbesondere dem öffentlichen 230 V-Netz oder dergleichen vorgesehen sein. Im stationären Betrieb kann auf diese Weise die Energieversorgung aus dem öffentlichen Energieversorgungsnetz anstatt aus dem lokalen Akkumulator erfolgen. Darüber hinaus kann vorgesehen sein, dass in diesem Fall der Akkumulator aus dem öffentlichen Energieversorgungsnetz geladen wird. Zu beachten ist jedoch, dass in diesem Fall das Fahrzeug ein Energieverteilungsnetz aufweisen muss, welches sowohl für die elektrische Spannung des Akkumulators als auch für die elektrische Spannung des öffentlichen Energieversorgungsnetzes geeignet ist, die in der Regel voneinander abweichen. Die elektrische Spannung des Akkumulators ist in der Regel eine Gleichspannung von 12 oder 24 V. Die öffentliche Energieversorgung liefert dagegen in der Regel eine Wechselspannung von 230 V bei 50 Hz.

Herstellungstechnisch erweist es sich als problematisch, dass das Energieverteilungsnetz für unterschiedliche Spannungen geeignet sein soll. Dies erfordert nämlich die Beachtung der einschlägigen Sicherheitsvorschriften, gemäß denen es erforderlich ist, entsprechende Sicherheitsmaßnahmen zum Schutz vor gefährlichen Zuständen vorzusehen. Auf die entsprechende Normung, beispielsweise EN60335, wird verwiesen. Das Energieverteilungsnetz weist als einen Bestandteil einen Kabelbaum auf, mit dem die elektrische Energie in bestimmungsgemäßer Weise von den Energiequellen, beispielsweise dem Akkumulator oder der öffentlichen Energieversorgung, zu den entsprechenden Verbrauchern, den Lampen, den sonstigen elektrischen Geräten und dergleichen, geliefert werden kann. Die Herstellung des Kabelbaums erfordert deshalb eine besondere Aufmerksamkeit, damit nicht versehentlich falsche Anschlüsse miteinander verbunden werden können und daraus resultierend gefährliche Zustände hergeleitet werden können. Wird beispielsweise ein 12 V - Gleichspannungsanschluss mit einem 230 V - Wechselspannungsanschluss verwechselt, so wird einerseits ein 12 V - Verbraucher durch die Beanspruchung mit 230 V Wechselspannung bis hin zur Zerstörung überlastet werden. Im umgekehrten Fall kann selbiges passieren, weil die Verbraucher für 230 V in der Regel für einen Betrieb an einer Wechselspannung ausgelegt sind und nicht für eine Belastung mit einer Gleichspannung. Derartige Kabelbäume werden vor dem Einbau vorbereitet, wobei einzelne Verdrahtungen in zusätzlichen Abzweigdosen und Schaltelemente in der Bandfertigung vorgenommen werden müssen. Diese Art der Elektroinstallation kann Fehler in der Verdrahtung sowie schlechte Verbindungen bei einzelnen Stromkreisen hervorrufen und somit zusätzlichen Aufwand bei der Fehlersuche und Fehlerbeseitigung verursachen. Darüber hinaus erweist sich die bekannte Installation als wenig geeignet für eine nachträgliche Änderung oder Erweiterung.

Eine Baugruppe kann beispielsweise durch eine in einem Gehäuse angeordnete Leiterplatte gebildet sein, die entsprechend den gewünschten Funktionen mit Bauteilen bestückt ist. Natürlich kann die Leiterplatte anstatt in einem Gehäuse auch in vergossener Ausführung vorgesehen sein. Sie weist vorzugsweise Schnittstellen zum Anschluss der einzelnen Leitungen des Kabelbaums des Energieverteilungsnetzes auf. Diese Schnittstellen können durch Steckverbinder gebildet sein, die ein einfaches Verbinden des Kabelbaums und seiner Leitungen in vorgegebener Weise mit der Leiterplatte ermöglichen, und auf diese Weise eine gute funktionssichere elektrische Verbindung bereitstellen. Die für die Steuerung und Überwachung erforderlichen Bauelemente sind kompakt auf der Leiterplatte angeordnet. Diese Bauelemente können beispielsweise Relais, Schütze, Transistoren, IGBT's, MOSFET's sowie weitere aktive und passive Bauelemente sein, mit denen die wunschgemäßen Funktionen realisiert werden können. Die Bauelemente können in bedrahteter Technologie, SMD-Technologie oder Kombinationen hiervon mit der Leiterplatte verbunden sein. Die vorliegende Erfindung erlaubt es somit, den sogenannten Leistungsbereich, das heißt der Bereich, über den die Energie den einzelnen Verbrauchern bereitgestellt wird, von einem Steuerbereich, mit dem Signale bereitgestellt werden, um die wunschgemäße Steuerung beziehungsweise Überwachung vornehmen zu können, getrennt werden kann. Die Zusammenfassung sämtlicher Funktionen in der zentralen Baugruppe ermöglicht eine rationelle zuverlässige Herstellung unter Verwendung moderner Prüfmethoden. Auf diese Weise kann eine hohe Zuverlässigkeit erreicht werden. Weiterhin können separate Steuerleitungen beispielsweise für Schalter, Sensoren, Regler und dergleichen zusammengefasst werden. Abzweigdosen können auf diese Weise ebenfalls eingespart werden. Darüber hinaus entfällt die aufwendige Verkabelung von Wechsel- und Kreuzschaltungen, wie sie für die Steuerung von Lampen von mehreren Stellen aus in konventioneller Weise vorzusehen sind. So kann die Baugruppe beispielsweise mit Dimmfunktionen für Lampen oder leistungsgeregelte Verbraucher ausgerüstet sein. Die Erfindung erlaubt darüber hinaus Bedienungselemente und Anzeigeneinheiten an beliebigen Orten des Fahrzeugs mit geringem Aufwand vorzusehen. Tritt im praktischen Betrieb ein Fehler auf, kann auf einfache Weise die Baugruppe ausgetauscht oder nachgearbeitet werden, um den Fehler zu beheben. Eine hohe Wartungsfreundlichkeit kann hierdurch erreicht werden. Auch ermöglicht die vorliegende Erfindung eine einfache Nachrüstung, indem lediglich der zusätzliche Verbraucher an der Baugruppe angeschlossen wird. Der aufwendige Eingriff in die bestehende Verkabelung kann erheblich reduziert werden.

In einer Weiterbildung wird vorgeschlagen, dass die elektrische Anlage ein BUS-System aufweist. Das BUS-System kann beispielsweise durch einen USB-BUS, einen IEEE-BUS, einen IDE-BUS oder dergleichen gebildet sein. An dem BUS-System können Sensoren und Steuerelemente angeordnet sein, die Steuerungs- oder Messinformationen an die Baugruppe übermitteln. Dies ermöglicht die Steuerung von beliebiger, entfernter Stelle in beziehungsweise außerhalb des Fahrzeugs. Besonders vorteilhaft erweist es sich, dass Steuerelemente für erhebliche geringere Sicherheitsanforderungen ausgerüstet sein müssen, als es erforderlich wäre, wenn diese für die direkte Steuerung der Verbraucher vorzusehen wären. Sie sind deshalb lediglich für die sogenannte Kleinspannung auszurüsten. Gleiches gilt natürlich auch für Sensoren und dergleichen. Daneben oder zusätzlich kann natürlich auch ein direkter Anschluß von Sensoren oder Steuerelementen an einer Steuereinheit vorgesehen sein. Diese Ausgestaltung erweist sich bei geringem Funktionsumfang gegenüber einem BUS-System als kostengünstiger, so daß es gegebenenfalls eingespart werden kann.

In einer vorteilhaften Weiterbildung wird vorgeschlagen, dass das Energieverteilungsnetz sternförmig und/oder ringförmig ausgebildet ist. Mit einem ringförmigen Energieverteilungsnetz kann eine hohe Zuverlässigkeit erreicht werden, auch wenn an einer Stelle des Netzes eine Störung auftritt. In diesem Fall erfolgt dann die Energieversorgung über den nicht gestörten Teil des Netzes. Eine sogenannte redundante Energieversorgung kann erreicht werden. Darüber hinaus kann eine sternförmige Netzstruktur vorgesehen sein, die es ermöglicht, für jeden Verbraucher angepasst eigene Versorgungsleitungen vorzusehen. Diese erlaubt es, die jeweiligen Leitungen direkt an den Energiebedarf des angeschlossenen Verbrauchers anzupassen. Hierdurch kann nicht nur Materialaufwand reduziert werden, sondern es kann durch Vorsehen von angepassten Leitungsschutzeinrichtungen auch eine hohe Sicherheit bezüglich Störungen und Überlastung des Energieverteilungsnetzes erreicht werden.

Gemäß einer weiteren Ausgestaltung weist das Energieverteilungsnetz wenigstens zwei Teilnetze für unterschiedliche elektrische Spannungen auf. Vorzugsweise sind dies eine Gleichspannung von 12 beziehungsweise 24 V sowie eine Wechselspannung in Höhe von 230 V. Die zwei Teilnetze sind vorzugsweise an die elektrischen Erfordernisse optimal angepasst ausgerüstet. So ist beispielsweise bei einem 12 V - Teilnetz eine geringere Isolationsstärke erforderlich als bei einem 230 V - Teilnetz. Im Unterschied dazu sind bei dem 12 V - Teilnetz in der Regel die Kupferquerschnitte der Leitungen größer als bei dem 230 V - Teilnetz, weil die Kleinspannungsverbraucher einen deutlich höheren Strombedarf als die 230 V - Verbraucher aufweisen. Durch die Optimierung können Kosten eingespart werden.

Um einen bedarfsgerechten Energieaustausch zwischen den Teilnetzen zu ermöglichen, wird vorgeschlagen, dass die Teilnetze mittels eines elektrischen Energiewandlers koppelbar sind. Der Energiewandler kann beispielsweise ein Transformatometzteil oder ein Schaltnetzteil sein, welches das 230 V - Teilnetz mit dem 12 V - Teilnetz verbindet, indem vom 230 V - Teilnetz Energie in das 12 V - Teilnetz überführt wird. Daneben kann auch ein Wechselrichter für einen umgekehrten Energiefluss vorgesehen sein Der Energiewandler ist vorzugsweise steuerbar. Er kann darüber hinaus zur automatischen Ladung des Akkumulators vorgesehen sein. Vorzugsweise ist der elektrische Energiewandler in diesem Fall mit einer Ladekennlinie versehen, die es ermöglicht, den Akkumulator in einer möglichst schonenden Art und Weise zu laden, um einen Alterungsvorgang möglichst zu reduzieren. So kann beispielsweise vorgesehen sein, dass der Energiewandler bei Detektion der 230 V - Energieversorgung automatisch die Ladung des Akkumulator vornimmt.

Weiterhin wird vorgeschlagen, dass das Energieverteilungsnetz mit einer öffentlichen Energieversorgung koppelbar ist. Auf diese Weise kann eine zusätzliche Energieversorgung erreicht werden, wobei lokale Ressourcen zur Energieversorgung reduziert werden können. Sie können darüber hinaus auch nur für einen kleineren Bedarf ausgelegt sein. Dies ermöglicht es, Kosten und Gewicht für das Fahrzeug einzusparen. Die Kopplung kann über geeignete Verlähgerungskabel mit einem Schukostecksystem oder dergleichen erfolgen.

In einer Weiterbildung wird vorgeschlagen, dass die elektrische Anlage einen Energiespeicher aufweist. Dies ermöglicht eine unabhängige Energieversorgung des Fahrzeugs inklusive des Wohnaufbaus auch während der Fahrt. Darüber hinaus kann im stationären Betrieb bei Kopplung mit einem öffentlichen Energieversorgungsnetz eine unterbrechungsfreie Stromversorgung erreicht werden. Bei hoher Mobilität kann zugleich eine hohe Versorgungssicherheit mit elektrischer Energie erreicht werden.

In einer Weiterbildung wird vorgeschlagen, dass die elektrische Anlage eine Energieerzeugungseinrichtung aufweiset. Mit der Energieerzeugungseinrichtung kann eine weiter erhöhte Unabhängigkeit von einer öffentlichen Energieversorgung erreicht werden. Die Energieversorgungseinrichtung kann beispielsweise eine Solarzelle, eine Brennstoffzelle, ein motorangetriebenes Aggregat, ein Windrad oder dergleichen sein. Insbesondere wenn über einen längeren Zeitraum keine öffentliche Energieversorgung verfügbar ist, kann eine hoch effiziente Energieversorgung erreicht werden.

Um die Sicherheit bei der Montage zu erhöhen, wird vorgeschlagen, dass die elektrische Anlage eine kodierte Steckverbindung aufweist. Dies ermöglicht einen Verpolungsschutz, der insbesondere bei Verwendung von Gleichspannung wichtig sein kann. Eine Vielzahl von Gleichspannungsverbrauchem ist nämlich gegenüber Verpolung nur unzureichend oder gar nicht geschützt und kann durch eine Verpolung beschädigt wenn nicht sogar zerstört werden. Im Bereich der Wechselspannung kann beispielsweise sichergestellt werden, dass eine als Schutzleiter gekennzeichnete Leitung nicht versehentlich mit Phase oder Null verbunden werden kann. Die Sicherheit kann weiter erhöht werden.

Gemäß einer Ausgestaltung wird vorgeschlagen, dass das Energieverteilungsnetz eine Leitungsschutzeinrichtung aufweist. Diese ermöglicht es, die Leitung gegen kurzzeitige und dauerhafte Überlastung zu schützen. Die Leitungsschutzeinrichtung kann mit einer automatischen Überlastabschaltung versehen sein. Wird zum Beispiel durch Defekt eines Verbrauchers ein erhöhter Strom gezogen, kann die Energieversorgung durch die Leitungsschutzeinrichtung mittels der automatischen Überlastabschaltung die Energieversorgung einstellen und auf diese Weise die Gefahr von gefährlichen Zuständen reduzieren.

Gemäß einer Weiterbildung wird vorgeschlagen, dass das Fahrzeug eine Ein- und/oder Ausgabeeinheit aufweist. Die Eingabeeinheit kann durch eine Tastatur, eine Maus, eine Berührungssteuerung, einen Berührungsbildschirm und dergleichen gebildet sein. Die Ausgabeeinheit kann beispielsweise durch einen Drucker, einen Berührungsbildschirm sowie einen Bildschirm gebildet sein. Das Vorsehen einer Eingabeeinheit erlaubt es, die Steuerung in wunschgemäßer Weise vorzunehmen. Darüber hinaus besteht die Möglichkeit, Parameter und Schwellwerte bedarfsgerecht einstellen zu können. So kann beispielsweise vorgesehen sein, dass eine Außenbeleuchtung zu bestimmten Tageszeiten eingeschaltet wird. Es kann vorgesehen sein, dass die Beleuchtung eingeschaltet wird, wenn ein Außenlicht einen bestimmten vorgebbaren Schwellwert unterschreitet. Ein Ausschalten der Beleuchtung kann darüber hinaus zu einem festen, vorgebbaren Zeitpunkt eingestellt sein, zu dem davon auszugehen ist, dass die Beleuchtung nicht weiter benötigt werden wird. Die Eingabeeinheit kann demnach auch dazu dienen, Parameter und Schwellwerte einzustellen. Mit der Ausgabeeinheit ist es möglich, aktuelle Einstellungen abzufragen. Daneben kann die Ausgabeeinheit natürlich auch zur Meldung von Störungen, Fehlern und dergleichen verwendet werden. Für diese Anwendung kann die Ausgabeeinheit beispielsweise auch in akustischer Form durch eine Hupe, einen Summer, eine Klingel oder dergleichen gebildet sein oder auch durch eine Wamleuchte, ein Rundumlicht oder dergleichen.

In einer vorteilhaften Weiterbildung wird vorgeschlagen, dass das Fahrzeug eine Rechnereinheit aufweist. Mit der Rechnereinheit kann eine Automatisierung der Steuerung und/oder der Überwachung erreicht werden. Besonders vorteilhaft erweist sich die Rechnereinheit in Verbindung mit der Ein- und/oder Ausgabeeinheit. So kann die Rechnereinheit ein ablauffähiges Computerprogramm aufweisen, welches mittels der Eingabeeinheit an aktuelle Funktionswünsche angepasst werden kann. Der aktuelle Status der Rechnereinheit kann mittels der Ausgabeeinheit angezeigt werden. Die Verwendung der Rechnereinheit erlaubt es darüber hinaus, die Steuerungs- und/oder Überwachungsmittel jederzeit ohne großen Aufwand bedarfsgerecht anpassen zu können. Um die Anpassung zu erleichtern, können darüber hinaus Schnittstellen vorgesehen sein, die es erlauben, entsprechende Programme, Parameter und Schwellwerte aus einer separaten Speichereinheit an die Rechnereinheit zu übermitteln. Eine hoch flexible Steuerung und/oder Überwachung kann erreicht werden.

Es wird ferner ein Verfahren zum Betrieb einer elektrischen Anlage eines Fahrzeugs mit einem Energieverteilungsnetz vorgeschlagen, wobei eine Endstelle des Energieverteilungsnetzes von einem Steuerungsmittel zentral gesteuert wird. Mittels der zentralen Steuerung kann eine Vereinfachung der Steuerungsvorgänge erreicht werden, indem beispielsweise von der zentralen Baugruppe aus Verbraucher beliebig gesteuert werden können. Die Zentralisierung der Steuerung kann beispielsweise dazu verwendet werden, alle Verbraucher beim Verlassen des Fahrzeugs zentral abschalten zu können. Zugleich kann vorgesehen sein, dass Sicherheitseinrichtungen wie Bewegungsmelder und dergleichen aktiviert werden können. Darüber hinaus können aber auch weitere Vorteile genutzt werden, so beispielsweise eine automatische Licht- und/oder Jalousiesteuerung, eine automatische Heizungs- oder Klimaanlagensteuerung oder dergleichen. Die Steuerung kann beispielsweise auf Zeitbasis erfolgen, so dass beispielsweise eine Heizung oder eine Klimaanlage nur zu bestimmten, vorgebbaren Zeiträumen aktiv ist. Die Steuerung kann an weitere Bedingungen gekoppelt sein, so beispielsweise die Steuerung einer Außenleuchte in Abhängigkeit von der Helligkeit des Außenlichts. Unterschreitet beispielsweise in einer Abenddämmerung die Lichtstärke einen vorgebbaren Schwellwert, kann die Betätigung der Außenleuchte freigegeben sein. Ist dieser Schwellwert nicht erreicht, ist die Betätigung der Außenleuchte gesperrt und die Außenleuchte permanent ausgeschaltet. Ein hoher Komfort kann erreicht werden.

Gemäß einer Weiterbildung wird eine Zustandsgröße des Energieverteilungsnetzes überwacht, angezeigt und/oder gemeldet. Eine Zustandsgröße kann beispielsweise der Strom im Energieverteilungsnetz an einer vorgebbaren Stelle, eine elektrische Spannung an einer vorgebbaren Stelle des Energieverteilungsnetzes, die Leistung eines Verbrauchers oder dergleichen sein. Für die Zustandsgröße können Schwellwerte vorgegeben sein, deren Überbeziehungsweise Unterschreiten Funktionen oder Meldungen zur Folge haben. Neben den zuvor genannten lokalen Meldungen kann vorgesehen sein, dass die Meldung auch über Funk, über das GSM-Netz oder dergleichen an eine vorgebbare, entfernte Stelle gemeldet wird. Die Überwachung kann natürlich auch den Energiefluss im Energieverteilungsnetz umfassen. So kann der Energieverbrauch an einzelnen Stellen des Energieverteilungsnetzes aufgezeichnet werden. Es können Überlastungen im Energieverteilungsnetz ermittelt, angezeigt und gegebenenfalls gemeldet werden.

In einer Weiterbildung wird vorgeschlagen, dass die Baugruppe Kommunikationsmittel aufweist Dies erlaubt es, eine Fernsteuerung zu realisieren und darüber hinaus Zustandsgrößen abzufragen. Die Kommunikationsmittel können beispielsweise in einem BUS, einer Funkverbindung, einer Kommunikationsverbindung über das GSM-Netz oder dergleichen bestehen. Tritt eine Störung auf, kann diese an eine vorgebbare entfernte Stelle übermittelt werden. Weiterhin kann auch eine Aktualisierung des Computerprogramms von entfernter Stelle vorgenommen werden. Auch eine Ferndiagnosefunktion kann erreicht werden.

In einer weiteren Ausgestaltung wird vorgeschlagen, dass bei Energieversorgung aus dem Energiespeicher die maximale Leistung begrenzt wird. Hierdurch kann erreicht werden, dass die Alterung des Akkumulators reduziert wird. Dies erlaubt eine möglichst lange, zuverlässige Energieversorgung.

In einer vorteilhaften Weiterbildung wird vorgeschlagen, dass ein einzelner Zweig des Energieverteilungsnetzes getestet wird. Dies erlaubt es, eine Fehlersuche zu vereinfachen. Diese kann auf Anforderung durchgeführt werden. Es kann auch extern vorgegeben werden, welche Fehlersuche durchgeführt werden soll. Die Fehlersuche kann auch einen Verbrauchertest umfassen. Das Testen kann zeitdiskret, beispielsweise zu äquidistanten Zeitpunkten, oder auch in unregelmäßigen Intervallen durchgeführt werden. Dies erweist sich insbesondere dann als vorteilhaft, wenn konventionelle, fachgerechte Wartungsmöglichkeiten nicht verfügbar sind und Störungen mit wenig Hilfsmitteln schnell aufgefunden werden müssen.

Darüber hinaus wird vorgeschlagen, dass die Baugruppe zu vorgebbaren Zeitpunkten einem Selbsttest unterzogen wird. Dies erlaubt es, die Zuverlässigkeit weiter zu erhöhen. Der Selbsttest kann den Test einzelner Funktionen und Verbraucher umfassen. Er kann beispielsweise wöchentlich oder monatlich durchgeführt werden. Daneben kann vorgesehen sein, dass der Selbsttest auch manuell außerhalb vorgegebener Zeitpunkte durchgeführt werden kann. So können beispielsweise die Schaltzustände von Relais oder Schützen geprüft werden. Darüber hinaus können die elektronischen Schalter und/oder Regler sowie Dimmer oder dergleichen geprüft werden.

Mit der Erfindung wird vorgeschlagen, dass die von einem Zugfahrzeug durch das Energieverteilungsnetz aufgenommene Leistung begrenzt wird. Diese Ausgestaltung erweist sich insbesondere dann als vorteilhaft, wenn beispielsweise ein Wohnhänger von einem Zugfahrzeug mit elektrischer Energie versorgt wird. Üblicherweise wird die Energie über eine Hängerkupplung bereitgestellt. Das Zugfahrzeug verfügt in der Regel über eine Sicherung, mit der die entsprechende Leitung des Zugfahrzeugs gesichert wird. Wird die maximal zu entnehmende Leistung überschritten, löst die Sicherung aus und die Energieversorgung durch das Zugfahrzeug ist unterbrochen. Dies kann in der vorliegenden Ausgestaltung vermieden werden, indem das Energieverteilungsnetz des Fahrzeugs für eine Begrenzung der maximal entnehmbaren Leistung vom Zugfahrzeug selbst sorgt. Dies kann beispielsweise dadurch geschehen, dass die aktuell entnommene Leistung vom Zugfahrzeug mittels geeigneter Sensoren wie Strommessgeräte und dergleichen erfasst wird und mit einem vorgebbaren Schwellwert verglichen wird. Wird der Schwellwert überschritten, kann beispielsweise eine Warnmeldung ausgegeben werden. Darüber hinaus kann vorgesehen sein, dass das Energieverteilungsnetz selbständig den Energieverbrauch aller oder auch lediglich einzelner Verbraucher soweit absenkt, dass der maximal zulässige Wert für die Leistungsentnahme aus dem Zugfahrzeug nicht überschritten wird. So kann beispielsweise vorgesehen sein, dass bei einem Ladebetrieb des Akkumulators des Fahrzeugs ein Ladestrom in Abhängigkeit von der maximal entnehmbaren Energie des Zugfahrzeugs eingestellt wird. Werden im Fahrzeug zusätzliche Verbraucher wie Lampen, Ventilatoren oder dergleichen eingeschaltet, wird der Ladestrom gegebenenfalls entsprechend reduziert, um die maximale Leistungsentnahme aus dem Zugfahrzeug nicht zu überschreiten. Es kann auch vorgesehen sein, dass vorgebbar einige Verbraucher im Bereich der maximalen Leistungsentnahme aus dem Zugfahrzeug nicht zugeschaltet werden können beziehungsweise automatisch abgeschaltet werden. Hierdurch kann eine erhöhte Zuverlässigkeit und Betriebssicherheit erreicht werden. Probleme im Zusammenhang mit durch Überlastung aufgetretene Energieversorgungsstörungen können vermieden werden.

Weitere Vorteile und Merkmale sind der folgenden Beschreibung eines Ausführungsbeispiels zu entnehmen. Das Ausführungsbeispiel dient lediglich der Erläuterung der Erfindung und ist für diese nicht beschränkend.

Es zeigen:
- Fig. 1: ein Prinzipschaltbild für ein erfindungsgemäßes Fahrzeug mit einem Wohnaufbau und
- Fig. 2: schematisch eine Draufsicht auf eine zentrale Baugruppe gemäß der Erfindung.

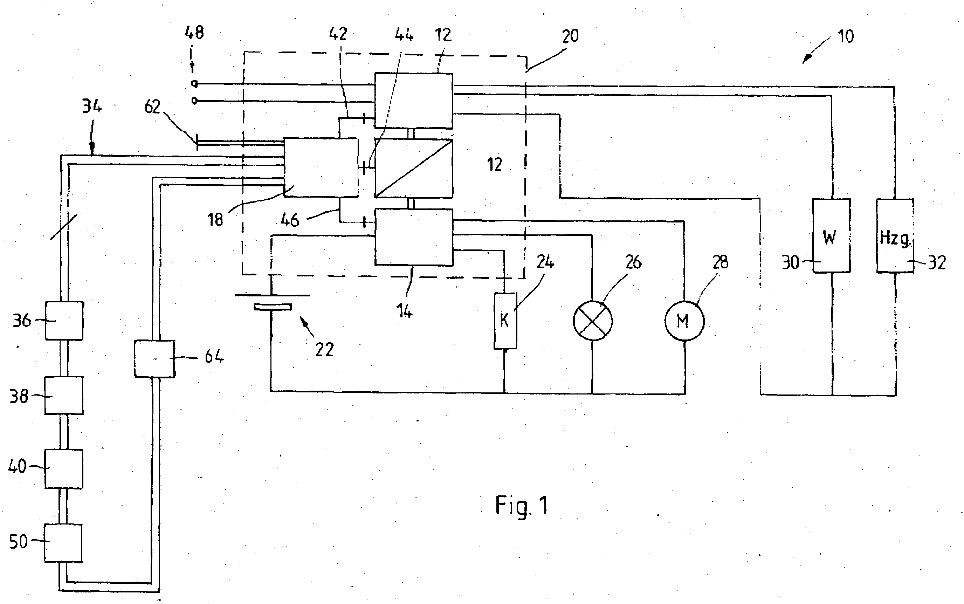

In Fig. 1 ist schematisch ein Schaltbild für ein erfindungsgemäßes Fahrzeug mit einem Wohnaufbau von dessen Energieverteilungsnetz 10 dargestellt. Das Energieverteilungsnetz 10 ist Bestandteil einer nicht näher dargestellten elektrischen Anlage eines ebenfalls nicht weiter dargestellten Wohnwagens. Das Energieverteilungsnetz 10 weist ein Wechselspannungsnetz 12 und ein Gleichspannungsnetz 14 auf. Die beiden Teilnetze 12, 14 sind über eine Kopplungseinheit 16 miteinander in elektrischer Verbindung, die entsprechend des aktuellen Energieflusses die Energie umformt und auf diese Weise den Energiefluss zwischen den Teilnetzen 12, 14 ermöglicht. In der vorliegenden Ausgestaltung ist das Wechselspannungsteilnetz 12 für eine Wechselspannung von 230 V bei 50 Hz ausgelegt. Das Gleichspannungsnetz 14 ist für eine Gleichspannung von 12 V ausgelegt. Damit der Energiefluss durch die Kopplungseinheit 16 gewährleistet werden kann, weist diese ein nicht näher dargestelltes Schaltnetzteil auf, welches die Energie aus dem Wechselspannungsnetz 12 entnimmt und in eine für das Gleichspannungsnetz 14 geeignete Spannung umwandelt. Als Schaltnetzteil kommen handelsübliche, bekannte Schaltnetzteile in Frage. Für den entgegengesetzten Energiefluss ist in der Kopplungseinheit 16 ein ebenfalls nicht weiter dargestellter Wechselrichter vorgesehen, der aus dem Gleichspannungsnetz 14 Gleichspannungsenergie entnimmt und über seine Wechelrichtungsfunktion in eine für das Wechselspannungsnetz 12 geeignete Wechselspannung phasenangepasst umwandelt. Mit dem Wechselrichter kann der Energiefluss vom Gleichspannungsnetz 14 in das Wechselspannungsnetz 12 gewährleistet werden. In der vorliegenden Ausgestaltung ist vorgesehen, dass sowohl der Wechselrichter als auch das Schaltnetzteil hinsichtlich ihrer Aktivität steuerbar sind Das bedeutet, dass nicht nur eine Ein-/Ausschaltfunktion zur Verfügung steht, sondern auch die Energiemenge, die jeweils umgewandelt wird, eingestellt werden kann.

An das Gleichspannungsnetz 14 ist ein Akkumulator 22 angeschlossen, der vorliegend als Blei-Schwefelsäure-Akkumulator ausgebildet ist, der eine Nennspannung von 12 V aufweist. Ferner ist an dem Gleichspannungsnetz 14 eine Kühlschrankzündeinrichtung 24, eine Lampe 26 sowie ein Ventilatormotor 28 angeschlossen. Der Ventilatormotor 28 treibt einen Ventilator zur Raumlüftung an. Die Lampe 26 stellt eine Raumbeleuchtung dar. Mit der Kühlschrankzündeinrichtung 24 kann ein gasbetriebener Kühlschrank aktiviert werden. Das Gleichspannungsnetz 14 ist als Sicherheitskleinspannungsnetz ausgebildet, weshalb die Kopplungseinheit 16 mit entsprechenden Schutz- und Isolationsmaßnahmen ausgerüstet ist, so dass die diesbezüglichen normgemäßen Anforderungen erfüllt werden können.

Das Wechselspannungsnetz 12 ist mit einem Netzanschluss 48 versehen, der mit einer öffentlichen Energieversorgung verbindbar ist. Darüber hinaus sind am Wechselspannungsnetz 12 elektrische Verbraucher in Form eines Warmwasseraufbereiters 30 sowie einer elektrischen Heizung 32 angeschlossen.

Ferner ist eine Steuereinheit 18 vorgesehen, die über Steuerleitungen 42, 44, 46 mit dem Gleichspannungsnetz 14, dem Wechselspannungsnetz 12 sowie der Kopplungseinheit 16 in Kommunikationsverbindung steht. Die Steuereinheit 18 erlaubt es, Steuerbefehle an die angeschlossenen Einheiten 12, 14, 16 auszugeben. Darüber hinaus können Zustandsgrößen, Schaltzustände und dergleichen abgefragt werden.

An der Steuereinheit 18 ist ferner ein BUS 34 angeschlossen, an welchem ihrerseits ein Schalter 36 für die Lampe 26, ein Schalter 38 für den Ventilatormotor 28 sowie ein Schalter 40 für die Heizung 32 angeschlossen ist. Ferner ist ein Temperatursensor 50 mit dem BUS 34 in Kommunikationsverbindung. Der Temperatursensor 50 misst die Wassertemperatur der Wasseraufbereitung 30 und liefert ein entsprechendes Signal an die Steuereinheit 18, so dass eine Temperaturregelung erfolgen kann.

Der BUS 34 ist ringförmig aufgebaut, und seine Leitungen sind derart im Wohnwagen verlegt, dass ohne großen Aufwand weitere Steuer- und Sensorelemente nachgerüstet werden können.

Die Teilnetze 12, 14 weisen Schalt- und Stellelemente auf, mit denen der Energiefluss in der elektrischen Anlage 10 bestimmungsgemäß gesteuert werden kann. So ist für die Warmwasseraufbereitung 30 ein nicht näher dargestelltes TRIAC-Schaltelement vorgesehen, mit welchem die Wechselspannung für die Warmwasseraufbereitung in wunschgemäßer Weise ein- beziehungsweise ausgeschaltet werden kann. Für die Heizung 32 ist dagegen ein nicht näher dargestelltes Relais vorgesehen. Das Gleichspannungsnetz 14 umfasst einen Transistorschalter für die Kühlschrankzündeinrichtung 24, eine Transistordimmeinrichtung für die Lampe 26 sowie ein Relais für den Ventilatormotor 28.

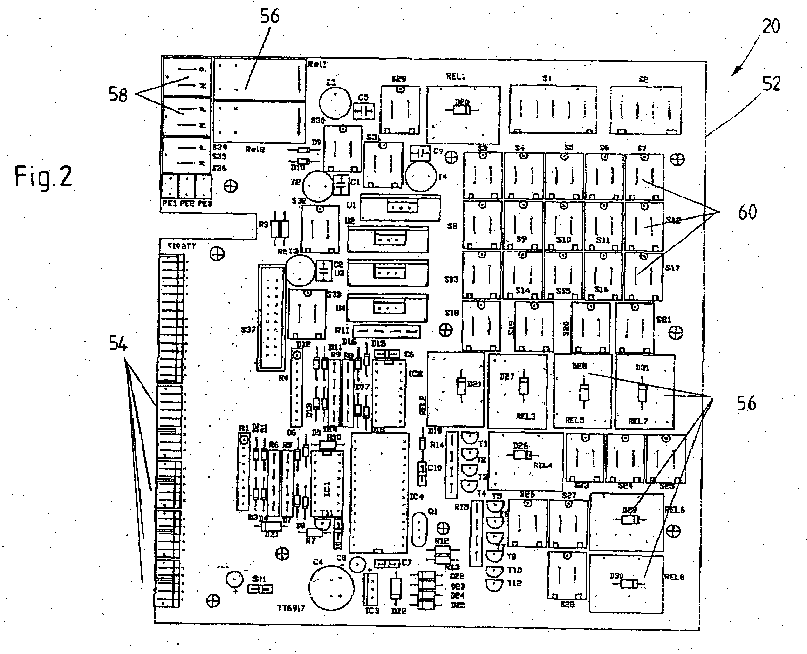

Das Wechselspannungsnetz 12, das Gleichspannungsnetz 14, die Kopplungseinheit 16 sowie die Steuereinheit 18 sind mit ihren Verbindungsleitungen zu einer zentralen Baugruppe 20 zusammengefasst. Die zentrale Baugruppe 20 weist eine Leiterplatte 52 auf, auf der alle erforderlichen Bauteile angeordnet sind. In der vorliegenden Ausgestaltung gemäß Fig. 2 ist diese Leiterplatte in bedrahteter Technologie vorgesehen. Sie weist an einer Seite einen als Leiterplattenrandsteckverbinder ausgebildeten Anschlussbereich 54 auf, an dem die Leitungen des BUS 34 mittels eines kodierten Leiterplattenrandsteckverbinders angeschlossen werden können. In Fig. 2 sind ferner Relais 56 zu erkennen, die die entsprechenden Schaltfunktionen des Energieverteilungsnetzes 10 bereitstellen. Das Energieverteilungsnetz 10 ist sternförmig ausgebildet. Weiterhin sind 230 V-Anschlüsse 58 für die 230 V-Verbraucher 30, 32 vorgesehen.

Ferner sind 12 V-Anschlüsse 60 vorgesehen, an die die Kleinspannungsverbraucher 24, 26, 28 anschließbar sind Die Anschlüsse 58, 60 sind kodiert, so dass eine Verpolung vermieden werden kann. Da die Kodierung für die Anschlüsse 58, 60 unterschiedlich ist, jedoch innerhalb der Anschlussgruppe 58 beziehungsweise 60 gleich ausgestaltet ist, kann ein versehentliches Anschließen eines Verbrauchers an einer dafür nicht geeigneten elektrischen Spannung vermieden werden. Gleichwohl ist durch die gleiche Kodierung der Anschlüsse eines Teilnetzes gewährleistet, dass ein geeigneter Verbraucher jeweils an einem beliebigen Anschluss angeschlossen werden kann.

Der Schalter 36 für die Lampe 26 ist vorliegend als Tastschalter ausgebildet, mit dem die Dimmfunktion für die Lampe 26 realisiert werden kann. In der vorliegenden Ausgestaltung wird die Dimmung durch die Länge der Betätigung des Schalters 36 beeinflusst. Eine Unterbrechung durch Loslassen der Taste kehrt die Dimmrichtung um. Die Dimmung ist vom gänzlich ausgeschalteten Zustand der Lampe 26 bis zum voll eingeschalteten Zustand der Lampe 26 möglich.

Die Steuereinheit 18 weist eine nicht näher dargestellte Rechnereinheit mit einem ablauffähigen Programm auf, die es ermöglicht, die Funktion der zentralen Baugruppe 20 individuell nach Bedarf anzupassen. Die Einstellung der zentralen Baugruppe 20 erfolgt über eine Schnittstelle 62, an die ein Laptop und/oder ein Computer angeschlossen werden kann. Das Programm mit den entsprechenden Parameterwerten ist in einer ebenfalls nicht weiter dargestellten Speichereinheit der Steuereinheit 18 gespeichert. Über die, Schnittstelle 62 kann ferner ein Diagnoseprogramm aktiviert werden, das es ermöglicht, die einzelnen Funktionen der zentralen Baugruppe zu testen.

Am BUS 34 ist ferner eine Infrarot-Empfängereinheit 64 angeschlossen, mit der ein Infrarot-Steuersignal einer nicht näher dargestellten, als Handapparat ausgebildeten Infrarot-Sendeeinrichtung empfangen werden kann. Hierdurch können einzelne vorbeschriebene Funktionen wie das Dimmen der Lampe 26 mittels einer Fernbedienung gesteuert werden.

Das in dien Figuren dargestellte Ausführungsbeispiel dient lediglich der Erläuterung der Erfindung und ist für diese nicht beschränkend. So können insbesondere die Funktionen der zentralen Baugruppe 20 und die daran angeschlossenen Verbraucher variieren.

**Bezugszeichenliste:**

| | | | |
|---|---|---|---|
| 10 | Energieverteilungsnetz | 40 | Schalter für Heizung. |
| 12 | Wechselspannungsteilnetz | 42 | Steuerleitung |
| 14 | Gleichspannungsteilnetz | 44 | Steuerleitung |
| 16 | Kopplungseinheit | 46 | Steuerleitung |
| 18 | Steuereinheit | 48 | Netzanschluss |
| 20 | Zentrale Baugruppe | 50 | Temperatursensor |
| 22 | Akkumulator | 52 | Leiterplatte |
| 24 | Kühlschrankzündeinrichtung | 54 | Anschlussbereich |
| 26 | Lampe | 56 | Relais |
| 28 | Ventilatormotor | 58 | 230 V - Anschluss |
| 30 | Warmwasseraufbereitung | 60 | 12 V - Anschluss |
| 32 | Heizung | 62 | Schnittstelle |
| 34 | BUS | 64 | Infrarot-Empfängereinheit |
| 36 | Schalter für Lampe | | |
| 38 | Schalter für Ventilator | | |

## Patentansprüche

1. Verfahren zum Betrieb einer elektrischen Anlage eines Fahrzeugs mit einem Wohnaufbau, wobei das Fahrzeug eine elektrische Anlage mit einem Energieverteilungsnetz aufweist, wobei die elektrische Anlage in einer zentralen Baugruppe zusammengefasste Steuerungs- und/oder Überwachungsmittel sowie an beliebigen Orten des Fahrzeugs vorgesehene Bedienungselemente und Anzeigeeinheiten verwendet, **dadurch gekennzeichnet, daß** eine Endstelle des Energieverteilungsnetzes von dem Steuerungsmittel zentral gesteuert und die von einem Zugfahrzeug durch das Energieverteilungsnetz aufgenommene Leistung begrenzt wird, zu welchem Zweck das Energieverteilungsnetz des Fahrzeugs für eine Begrenzung der maximal entnehmbaren Leistung vom Zugfahrzeug selbst sorgt.

2. Verfahren nach Anspruch 1, **dadurch gekennzeichnet, dass** eine Zustandsgröße des Energieverteilungsnetzes überwacht, angezeigt und/oder gemeldet wird.

3. Verfahren nach Anspruch 1 oder 2, **dadurch gekennzeichnet, dass** ein einzelner Zweig des Energieverteilungsnetzes getestet wird.

4. Verfahren nach einem der Ansprüche 1 bis 3, **dadurch gekennzeichnet, dass** die Baugruppe zu vorgebbaren Zeitpunkten einem Selbsttest unterzogen wird.

## Claims

1. A method for operating an electrical installation of a vehicle with a camping body, wherein the vehicle comprises an electrical installation having an energy distribution network, wherein the electrical installation uses control and/or monitoring means which are combined with each other to form a central module as well as operating elements and display units provided at any places of the vehicle, **characterized in that** a terminal point of the energy distribution network will be centrally controlled by the control means and the power absorbed by a towing vehicle via the energy distribution network will be limited, for which purpose the energy distribution network of the vehicle ensures itself a limitation of the maximum power that can be drawn by the towing vehicle.

2. A method according to claim 1, **characterized in that** a state variable of the energy distribution network will be monitored, displayed and/or announced.

3. A method according to claim 1 or 2, **characterized in that** an individual branch of the energy distribution network will be tested.

4. A method according to one of the claims 1 through 3, **characterized in that** the module will be subjected to a self-check at pre-determinable intervals.

## Revendications

1. Procédé permettant de faire fonctionner une installation électrique d'un véhicule ayant une cellule de camping-car, le véhicule comprenant une installation électrique ayant un réseau de distribution d'énergie, l'installation électrique utilisant des moyens de commande et/ou de surveillance combinés pour former un ensemble central ainsi que des éléments d'actionnement et des unités d'affichage prévus à n'importe quels endroits dans le véhicule, **caractérisé en ce qu'**un point terminal du réseau de distribution d'énergie est commandé de manière centrale par le moyen de commande et la puissance absorbée par un véhicule de traction via le réseau de distribution d'énergie est limitée, et dans ce but le réseau de distribution d'énergie du véhicule assure lui-même la limitation de la puissance pouvant être extraite au maximum par le véhicule de traction.

2. Procédé selon la revendication 1, **caractérisé en ce qu'**une variable d'état du réseau de distribution d'énergie est surveillée, affichée et/ou annoncée.

3. Procédé selon la revendication 1 ou la revendication 2, **caractérisé en ce qu'**une branche individuelle du réseau de distribution d'énergie est testée.

4. Procédé selon l'une des revendications 1 à 3, **caractérisé en ce que** l'ensemble est soumis à un auto-test à des instants pouvant être prédéterminés.
